# EUROPÄISCHE PATENTSCHRIFT

(11) **EP 0 919 748 B1**
(45) Veröffentlichungstag und Bekanntmachung des Hinweises auf die Patenterteilung: **08.08.2001**
(21) Anmeldenummer: 98120893.7
(22) Anmeldetag: 04.11.1998
(51) Int. Cl.: F16H 63/30, F16H 63/20, F16H 63/18

(54) **Schaltvorrichtung für Wechselgetriebe, insbesondere von Kraftfahrzeugen**
Shifting device for speed changing gear, especially for motor vehicles
Dispositif de changement de vitesse, notamment pour véhicules automobiles

(30) Priorität: 06.11.1997 DE 19748969
(43) Veröffentlichungstag der Anmeldung: 02.06.1999
(73) Patentinhaber: Ford Global Technologies, Inc., A subsidiary of Ford Motor Company, Dearborn, Michigan 48126 (US)
(72) Erfinder: Dahl, Peter, 51515 Kuerten (DE); Chazotte, Jean-Pierre, 50678 Köln (DE); Frankenberg, Dietmar, 50829 Köln (DE); Baumgarten, Lars, 53797 Lohmar (DE)
(74) Vertreter: Messulam, Alec Moses

(56) Entgegenhaltungen:
- DE-A- 2 727 833
- US-A- 5 285 694

## Beschreibung

Die Erfindung bezieht sich auf eine Schaltvorrichtung für Wechselgetriebe, insbesondere von Kraftfahrzeugen der im Oberbegriff des Patentanspruchs 1 erläuterten Art.

Aus der DE42 05 670 C1 ist eine Schaltvorrichtung für Wechselgetriebe von Kraftfahrzeugen bekannt, bei der eine Anzahl von auf einer oder mehreren Schaltstangen linear verschiebbaren Schaltgabeln, die Schaltmuffen von Synchronisiereinheiten betätigen, wobei die Schaltgabeln mit je einem in einer gemeinsamen Flucht liegenden Schaltstift versehen sind.

Bei der bekannten Schaltvorrichtung ist zur Betätigung der Schaltstifte der Schaltgabeln eine Schaltwalze vorgesehen, die in entsprechenden Nuten die Schaltstifte der Schaltgabeln aufnimmt, wobei die Nutenformen auf der Schaltwalze derart ausgebildet sind, daß jeweils während einer Betätigung einer Schaltgabel die entsprechenden anderen beiden Schaltgabeln in ihrer jeweiligen Neutrallage gesperrt sind.

Die Aufgabe der Erfindung ist es, eine Schaltvorrichtung für Wechselgetriebe; insbesondere von Kraftfahrzeugen, der im Oberbegriff des Patentanspruchs 1 erläuterten Art derart zu verbessern, daß mit einer wesentlich leichteren Hebelanordnung die gleiche Funktionalität erreicht wird, nämlich bei einer Bewegung einer ausgewählten Schaltgabel die entsprechenden anderen Schaltgabeln in ihrer Neutrallage zu verriegeln.

Gemäß der Erfindung wird diese Aufgabe gelöst, indem bei einer Schaltvorrichtung für Wechselgetriebe, insbesondere von Kraftfahrzeugen, der im Oberbegriff des Patentanspruchs 1 erläuterten Art, die im Kennzeichenteil des Patentanspruchs 1 aufgezeigten Merkmale angewendet werden.

Der eine Neutralgasse und drei Schaltgassen nach Art einer Schaltkulisse aufweisende Wähl-Sperrschieber, der über einen an einem Anlenkpunkt angreifenden Wählhebel linear im Getriebegehäuse verschiebbar ist und der auf die Schaltstifte der Schaltgabeln derart aufgesetzt ist, daß sich bei einem in einer Schaltgasse befindenden Schaltstift die beiden anderen Schaltstifte in der Neutralgasse liegen und oberhalb des Wähl-Sperrschiebers drei Doppelhebel parallel liegend angeordnet sind, wobei die beiden unteren, der linke bzw. der rechte Doppelhebel, jeweils den Schaltstift einer mittleren Schaltgabel und den Schaltstift einer äußeren Schaltgabel gelenkig umfassen und der obere Doppelhebel mit seinen Enden über Bolzen mit Punkten außerhalb der Mitten der unteren Doppelhebel verbunden ist und in seiner Mitte einen Anlenkbolzen aufweist, über den er über einen Einrückhebel linear verschiebbar ist, wird eine Hebelmechanik aufgezeigt, bei der durch die Doppelhebel eine gegenseitige Verriegelung der Schaltgabelstifte in der Weise erfolgt, daß jeweils nur ein Gang geschaltet werden kann, während die anderen beiden Schaltgabeln in ihren Ruhelagen fixiert werden.

Die Erfindung wird anhand einer in den beiliegenden Skizzen gezeigten Ausführungsform näher erläutert. Es zeigt:
- Fig. 1: eine Schrägrißdarstellung der erfindungsgemäßen Schaltvorrichtung mit den drei Schaltgabeln und ihren entsprechenden Schaltstiften und der erfindungsgemäßen Hebelanordnung;
- Fig. 2: eine Schrägrißdarstellung der Schaltvorrichtung nach Fig. 1, wobei zur besseren Erläuterung die oben liegenden Doppelhebel weggelassen sind und nur der Wähl-Sperrschieber gezeigt ist;
- Fig. 3: eine Draufsicht lediglich auf die erfindungsgemäße Hebelanordnung bei geschaltetem vierten Gang;
- Fig. 4: eine Draufsicht auf die erfindungsgemäße Hebelanordnung bei geschaltetem fünften Gang und
- Fig. 5: zeigt eine Draufsicht auf die erfindungsgemäße Schaltvorrichtung mit den für die Betätigung der Schaltvorrichtung erforderlichen Wählhebel und Schalthebel mit ihren Drehpunkten und Rastungen im Getriebegehäuse.

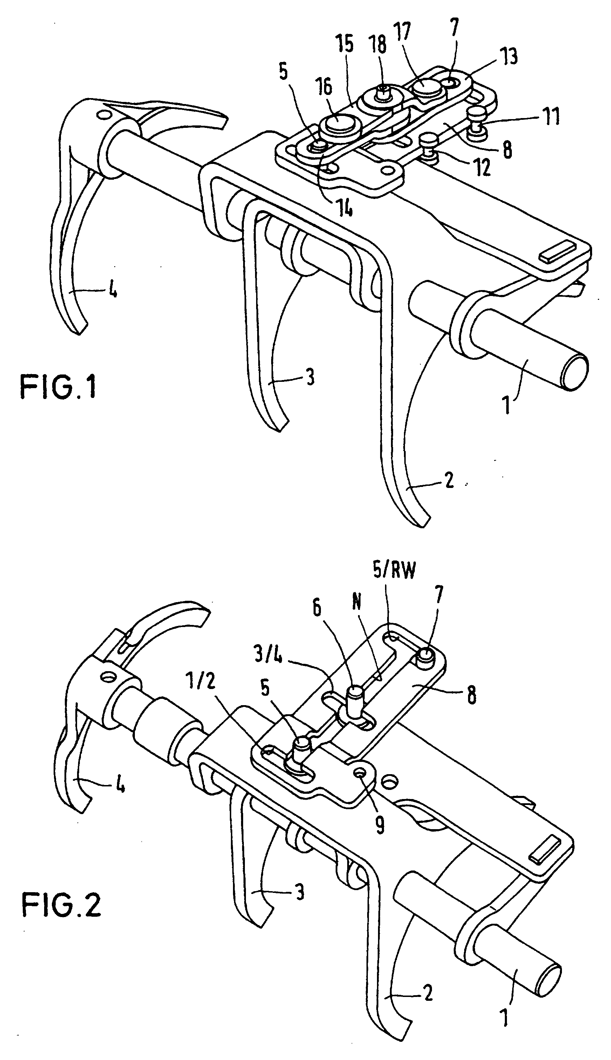

In den Schrägrißdarstellungen der Fig. 1 und 2 sind auf einer gemeinsamen, z.T. stationär gehaltenen und axial verschiebbaren Schaltstange 1 drei Schaltgabeln 2, 3 und 4 angeordnet, wobei die Schaltgabel 2 zum Schalten des ersten oder zweiten Ganges auf der Schaltstange 1 verschiebbar angeordnet ist ebenso wie die Schaltgabel 2 zum Schalten des dritten oder vierten Ganges. Zum Schalten des fünften Ganges wird bei der vorliegenden Ausführungsform die Schaltwelle 1 axial verschoben, wobei jedoch die Schaltgabeln 2 und 3 in ihrer Ruhelage verbleiben, da sie ja auf der Schaltstange 1 nur axial verschiebbar geführt sind.

Jede der Schaltgabeln 2, 3 und 4 ist fest mit einem Schaltstift 5, 6 und 7 verbunden, die bei Leerlauf im wesentlichen in einer Flucht liegend angeordnet sind.

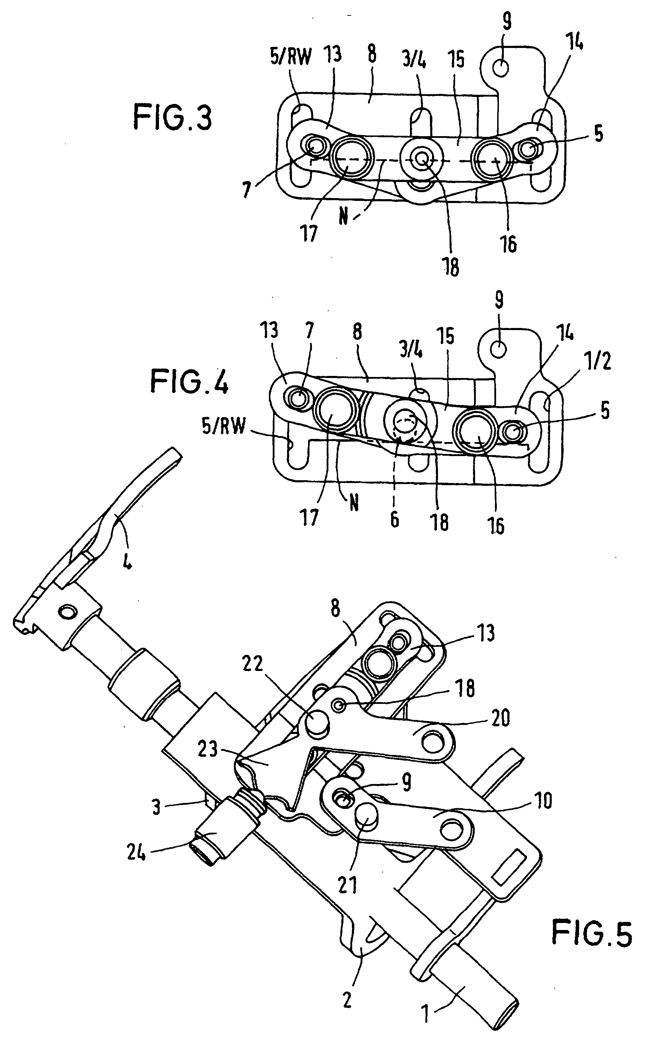

Auf die in einer Flucht liegenden Schaltstifte 5, 6 und 7 ist ein eine Neutralgasse N und Schaltgassen 1/2, 3/4 und 5/Rw aufweisender Wähl-Sperrschieber 8 aufgesetzt, der einen Anlenkpunkt 9 für einen Wählhebel 10 (siehe Fig. 5) aufweist.

Der Wähl-Sperrschieber 8 ist hierbei im Getriebegehäuse (nicht gezeigt) über beidseitig angeordnete Führungen 11 und 12 linear in Wählrichtung verschiebbar angeordnet. Die Neutralgasse N in Zusammenhang mit den Schaltgassen 1/2, 3/4 und 5/Rw sind derart ausgelegt, daß bei sich in einer Schaltgasse, z.B. der Schaltgasse 1/2 befindlichen Schaltstift 5 die beiden anderen Schaltstifte 6 und 7 in Bereich der Neutralgasse N liegen.

Auf dem so angeordneten Wähl-Sperrschieber 8 werden nun oberhalb drei Doppelhebel 13, 14 und 15 angeordnet, wobei die beiden unteren, der linke bzw. der rechte Doppelhebel 13 bzw. 14 jeweils den Schaltstift 6 der mittleren Schaltgabel 3 und den Schaltstift 7 bzw. 5 einer der äußeren beiden Schaltgabeln 4 bzw. 2 gelenkig umfassen.

Der obere Doppelhebel 15 ist mit seinen Enden über Schwenkbolzen 16 und 17 mit den unteren Doppelhebeln 14 und 13 gelenkig verbunden und weist in seiner Mitte einen Anlenkbolzen 18 für einen Schalthebel 20 auf. (Siehe Fig. 5!)

Die Funktionsweise der erfindungsgemäßen Schaltvorrichtung wird nunmehr in Zusammenhang mit den Fig. 3 und 4 erläutert, in denen eine Draufsicht nur auf die erfindungsgemäße Hebelanordnung gezeigt ist.

In Fig. 3 ist hierbei die Hebelanordnung in ihrer Lage gezeigt, in der der vierte Gang geschaltet ist.

Wie sich aus einer genauen Betrachtung der Hebelanordnung ergibt, ist der Wähl-Sperrschieber in einer Lage angeordnet, in der die Schaltgasse 3/4 mit der Lage des Schaltstiftes 6 zusammenfällt, wohingegen die beiden Schaltstifte 5 und 7 in der Neutralgasse N liegen. Wird über den Anlenkbolzen 18 bzw. den Schalthebel 20 eine Bewegung in Richtung Schalten des vierten Ganges ausgeübt, so kann über eine Parallelverschiebung des oberen Doppelhebels 15, der mit seinen Gelenkbolzen 16 und 17 an den unteren Doppelhebel 14 und 13 angreift, der Schaltstift 6 in die Lage für den vierten Gang verschoben werden. Die anderen beiden Hebel vollziehen dabei eine Schwenkbewegung um Bolzen 7 bzw. 5, da diese durch den Wähl-Sperrschieber gehalten werden.

Es wird darauf hingewiesen, daß die Gelenkverbindungen zwischen den Schaltstiften 5, 6 und 7 und den Doppelhebeln 13 und 14 als Langlochverbindungen ausgeführt sind, die eine entsprechende Freiheit bei der Bewegung bereitstellen.

In Fig. 4 ist die Lage der erfindungsgemäßen Hebelanordnung gezeigt, die diese bei eingerückten 5. Gang einnimmt.

Wie hier ersichtlich ist, befindet sich der Schaltstift 7 in der Schaltgasse 5/Rw während sich die Schaltstifte 5 und 6 in der Neutralgasse N befinden. Bei einer Verschiebung des Anlenkbolzens 18 in Richtung Schalten des 5. Ganges ist somit der Schwenkpunkt 16 des Doppelhebels 15 als Drehpunkt festgelegt und die entsprechende Bewegung wird über ein Verschränken um den Drehpunkt 16 durch den Drehpunkt 17 auf den Doppelhebel 13 und den Schaltstift 7 weitergegeben.

Die Lage der Neutralgasse N ist hierbei in gestrichelten Linien eingezeichnet, da sie von den darüber liegenden Doppelhebeln verdeckt wird.

In Fig. 5 ist eine Draufsicht auf die erfindungsgemäße Schaltvorrichtung gezeigt, in der nur die peripheren Teile der Schaltvorrichtung mit Bezugszeichen versehen, um das Verständnis der Funktion der erfindungsgemäßen Schaltvorrichtung zu vervollständigen.

So ist an sich bekannt, daß z.B. ein Wählhebel 10 und ein Schalthebel 20 über entsprechende Schwenkbolzen 21 und 22 im Getriebegehäuse oder in einem Schaltungsgehäuse schwenkbar gelagert sind.

Dabei ist die Ausgangsposition des Schalthebels 20 gleich, unabhängig welcher der Schaltgassen 1/2, 3/4 oder 5/Rw vorgewählt wurde.

Der Schalthebel 20 kann in bekannter Weise mit einem Rastsegment 23 versehen sein, das mit einem Rastelement 24 zusammenwirkt, um die Schaltstellungen des Schalthebels 20 festzulegen.

## Patentansprüche

1. Schaltvorrichtung für Wechselgetriebe, insbesondere von Kraftfahrzeugen, mit einer Anzahl von auf einer oder mit einer oder mehreren Schaltstangen (1) linear verschiebbaren, Schaltmuffen von Synchronisiereinheiten betätigenden, Schaltgabeln (2, 3 und 4), die mit je einem bei Leerlauf in einer gemeinsamen Flucht liegenden Schaltstiften (5, 6 und 7) versehen sind,
**dadurch gekennzeichnet**, daß
- ein eine Neutralgasse (N) und drei Schaltgassen (1/2, 3/4 und 5/Rw) nach Art einer Schaltkulisse aufweisender Wählhebel-Sperrschieber (8) über einen Anlenkpunkt (9) von einem Wählhebel (10) aus linear quer zur Schaltrichtung im Getriebe- oder Schaltgehäuse verschiebbar ist und auf die Schaltstifte (5,6 und 7) der Schaltgabeln derart aufgesetzt ist, daß bei einem sich in einer Schaltgasse (5/R, 3/4 oder 1/2) befindlichen Schaltstift (5, 6 oder 7) die beiden anderen Schaltstifte (6 und 7 oder 5 und 7 oder 6 und 7) in der Neutralgasse (N) liegen,
- oberhalb des Wähl-Sperrschiebers (8) drei Doppelhebel (13, 14 und 15) in Neutrallage parallel liegend übereinander angeordnet sind, wobei die beiden unteren, der linke bzw. der rechte Doppelhebel (13 bzw. 14) jeweils den Schaltstift (6) der mittleren Schaltgabel und die Schaltstifte (5 bzw. 7) einer der äußeren Schaltgabeln gelenkig umfassen und
- der obere Doppelhebel (15) mit seinen Enden über Schwenkbolzen (16 und 17) mit Punkten außerhalb der Mitten der unteren Doppelhebel (14 bzw. 13) verbunden ist und in seiner Mitte einen Anlenkbolzen (18) aufweist, über den er über einen Schalthebel (20) verlagerbar ist.

2. Schaltvorrichtung für Wechselgetriebe nach Anspruch 1,
**dadurch gekennzeichnet**, daß
- die Verbindungen zwischen den Schaltstiften (5, 6 und 7) und den Enden der Doppelhebel (13 bzw. 14) als Bolzen-Langlochverbindungen ausgebildet sind, die im Zusammenhang mit den lagefesten Schwenkbolzen (16 und 17) am oberen Doppelhebel (15) die Einnahme von unterschiedlichen Winkellagen ermöglichen.

3. Schaltvorrichtung für Wechselgetriebe nach den Ansprüchen 1 und 2,
**dadurch gekennzeichnet**, daß
- ein Wählhebel (10) und ein Schalthebel (20) über entsprechende Lagerbolzen (21 bzw. 22) im Getriebegehäuse bzw. in einem Schaltungsgehäuse (nicht gezeigt) schwenkbar gelagert sind und über Anlenkpunkte (9 bzw. 18) auf den Wahl-Sperrschieber (8) bzw. die Hebelanordnung (13, 14 und 15) angreifen.

4. Schaltvorrichtung für Wechselgetriebe nach den Ansprüchen 1 - 3,
**dadurch gekennzeichnet**, daß
- der Wähl-Sperrschieber (8) über ihn beidseitig umfassende Führungen (11 und 12) linear beweglich im Getriebegehäuse bzw. im Schaltungsgehäuse geführt ist.

## Claims

1. Shifting device for speed changing gears, especially for motor vehicles, with a number of shift forks (2, 3 and 4), displaceable in a linear way on one or with one or several shift rods (1), activating shift sleeves of synchronisation units, wherein these shift forks (2, 3 and 4) are provided respectively with a shift pin (5, 6 and 7) lying in mutual alignment during idling,
characterised in that
- a selector lever locking slider (8) with a neutral path (N) and three shift paths (1/2, 3/4, 5 / reverse) in the form of a shift rocker arm via a steering point (9) from a selector lever (10) can be displaced in a linear way crosswise to the shift direction in the gearbox casing or gearshift casing, and is placed on the shift pins (5, 6 and 7) of the shift forks in such a way that when a shift pin (5, 6 or 7) is in a shift path (5 / reverse, 3 / 4 or 1/2) the other two shift pins (6 and 7 or 5 and 7 or 6 and 7) lie in the neutral path,
- above the selector / locking slider (8) three double levers (13, 14 and 15) are positioned in neutral position lying parallel over each other, wherein the two lower, the left / the right double lever (13 / 14), respectively encompass in a jointed way the shift pin (6) of the middle shift fork and the shift pins (5 / 7) of one of the outer shift forks and
- the upper double lever (15) with is ends is connected via swivel bolts (16 and 17) with points outside the centres of the lower double levers (14 / 13) and has in its centre a steering bolt (18), via which it can be displaced via a shift lever (20).

2. Shifting device for speed changing gears according to Claim 1,
characterised in that
- the connections between the shift pins (5, 6 and 7) and the ends of the double levers (13 / 14) are formed as bolt / elongated hole connections, which in association with the position-secure swivel bolts (16 and 17) on the upper double lever (15) facilitate the assuming of various angular positions.

3. Shifting device for speed changing gears according to Claims 1 and 2,
characterised in that
- a selector lever (10) and a shift lever (20) are positioned in a swivelling way via corresponding bearing bolts (21 / 22) in the gearbox casing / in gearshift casing (not shown) and via steering points (9 / 18) contact on the selector / locking slider (8) / the lever arrangement (13, 14 and 15).

4. Shifting device for speed changing gears according to Claims 1 - 3,
characterised in that
- the selector / locking slider (8) via guides (11 and 12) encompassing it on both sides is guided in a linear moveable way in the gearbox casing / in the gearshift casing.

## Revendications

1. Dispositif de changement de vitesses pour boîte de vitesses, notamment de véhicules, avec un nombre de fourchettes de commande de vitesses (2, 3 et 4) déplaçables linéairement sur une ou avec une ou plusieurs tringles de changement de vitesses (1) et actionnant les manchons coulissants d'unités de synchronisation, les fourchettes de commande de vitesses étant munies chacune de broches de manoeuvre (5, 6 et 7) situées sur un alignement commun au point mort,
**caractérisé en ce que**
- un registre d'arrêt à levier sélecteur (8) présentant une voie neutre (N) et trois voies de passage de vitesses (1/2, 3/4 et 5/MA) semblables à une coulisse de guidage est déplaçable de façon linéaire et transversalement par rapport à la direction de commande dans le carter de la boîte de vitesses ou dans la boîte de vitesses par l'intermédiaire d'un point d'articulation (9) à partir d'un levier sélecteur (10), et est placé de telle sorte sur les broches de manoeuvre (5, 6 et 7) des fourchettes de commande de vitesses que, lorsqu'une broche de manoeuvre (5, 6 ou 7) se trouve dans une voie de passage de vitesses (5/MA, 3/4 ou 1/2), les deux autres broches de manoeuvre (6 et 7 ou 5 et 7 ou 6 et 7) se trouvent dans la voie neutre (N) et
- qu'au-dessus du registre d'arrêt à levier sélecteur (8), trois doubles leviers (13, 14 et 15) sont placés les uns sur les autres en parallèle en position neutre, les deux doubles leviers inférieurs (13 et 14), le gauche et le droit, comprenant respectivement de façon articulée la broche de manoeuvre (6) de la fourchette de commande de vitesses médiane et les broches de manoeuvre (5, respectivement 7) de l'une des fourchettes de commande de vitesses extérieures, et
- que le double levier supérieur (15) est raccordé, par ses extrémités, à des points à l'extérieur des milieux des doubles leviers inférieurs (14, respectivement 13) à l'aide d'axes d'inclinaison ou de pivotement (16 et 17) et présente en son milieu un boulon d'articulation (18), à l'aide duquel il est déplaçable au-dessus d'un levier de changement de vitesses (20).

2. Dispositif de changement de vitesses pour boîte de vitesses selon la revendication 1, **caractérisé en ce que** les liaisons entre les broches de manoeuvre (5, 6 et 7) et les extrémités des doubles leviers (13 et 14) sont formées comme des liaisons de boulons/trous oblongs qui permettent, en relation avec les axes d'inclinaison fixes (16 et 17) sur le double levier supérieur (15), la prise de différentes positions d'angle.

3. Dispositif de changement de vitesses pour boîte de vitesses selon les revendications 1 et 2, **caractérisé en ce qu**'un levier sélecteur (10) et un levier de changement de vitesses (20) sont placés de façon pivotante à l'aide de boulons de palier correspondants (21 et 22) dans le carter de la boîte de vitesses ou dans un carter d'engrenages (non représenté) et ont prise sur le registre d'arrêt (8) à levier sélecteur ou le dispositif de leviers (13, 14 et 15) par l'intermédiaire de points d'articulation (9 et 18).

4. Dispositif de changement de vitesses pour boîte de vitesses selon les revendications 1 à 3, **caractérisé en ce que** le registre d'arrêt à levier sélecteur (8) est guidé dans le carter de la boîte de vitesses ou dans le carter d'engrenages de façon déplaçable linéairement à l'aide de guidages (11 et 12) l'entourant des deux côtés.
